# EUROPEAN PATENT APPLICATION

(11) **EP 2 975 391 A1**
(43) Date of publication of application: **20.01.2016**
(21) Application number: 14177494.3
(22) Date of filing: 17.07.2014
(51) Int. Cl.: G01N 27/414

(54) **Chemosensor, its method of manufacture, and a method for the selective detection of analytes**

(71) Applicant: PEPTISYNTHA SA, 1120 Brussels (BE)
(72) Inventor: Turner, Michael Lewis, Manchester M33 6SH (GB); Behrendt, Jonathan Maximilian, Manchester M20 5NF (GB); Wrackmeyer, Marion Sofia, 95448 Bayreuth (DE); Urasinska-Wojcik, Barbara, Coventry CV3 1NB (GB); Das, Debasmita, Manchester M98 QB (GB); Majewski, Leszek Artur, Manchester M13 9PL (GB); Opoku, Jesse Kwabena, Bedford MK41 0BG (GB); Jeannin, Laurent, 1120 Brussel (BE)
(74) Representative: Kirkpatrick

(57) **Abstract**

This invention provides a sensor device for selectively detecting an analyte, comprising an organic field-effect transistor comprising an organic polymeric semiconductor layer connecting a source electrode and a drain electrode, and further comprising a gate electrode separated from said organic polymeric semiconductor layer by a dielectric layer, wherein said organic field-effect transistor further comprises an oligopeptide recognition sequence having from 4 to 12 amino-acids which is selective with respect to, or has selective affinity for, the analyte.

This invention further provides a method to produce said sensor device, and a method for detecting an analyte by operating said sensor device.

## Description

### FIELD OF THE INVENTION

The present invention relates to a chemosensor based on an organic field effect transistor, a method to produce said chemosensor, and a method for selectively detecting an analyte by operating said chemosensor. The present invention also relates to polymer blends incorporating an oligopeptide sequence, said blends being useful as a component of a dielectric layer or a semiconductor layer of an organic field-effect transistor for chemical detection.

### BACKGROUND OF THE INVENTION

A gated organic field effect transistor (hereinafter OFET) has a layered construction. It comprises an organic semiconductor channel (e.g. pentacene or the fullerene derivative phenyl-C₆₁-butyric acid methyl ester, hereinafter PCBM) connecting a source electrode and a drain electrode, and further comprises a gate electrode separated from said organic semiconductor channel by a dielectric layer. A voltage applied to the gate electrode causes accumulation of charges in the semiconductor at the interface with the dielectric and allows current flow between the source and drain electrodes. As semiconductors, organic materials exhibit a wide range of advantages over their inorganic counterparts. They enable solution-based processing, which allows for easy, cost-effective deposition and structuring technologies such as inkjet-printing or soft lithography, as well as cheaper equipment as compared to the inorganic-based technologies. An organic semiconductor channel based on PCBM may be solution processed, whereas one based on pentacene may be thermally evaporated.

EP 2 239 561 A1 discloses a sensor for detecting an analyte of interest in a gaseous or liquid medium, comprising an organic field-effect transistor wherein the dielectric layer includes, or consists of, an organic material adapted to change its electronic properties upon contact with said analyte for generating an electrically detectable response in the organic field-effect transistor. The analytes of interest may be gases such as oxygen or ammonia, ions, bases, acids, olefins or aromatic compounds. The organic material for the dielectric layer may be divinyltetramethyldisiloxane-bis(benzocyclobutane), poly(methylmethacrylate) (PMMA), poly(vinylalcohol) (PVA), crosslinked poly(vinylphenol) (PVP), or a polymeric material based on a poly(acrylate), poly(methacrylate), poly(acrylamide), poly(vinylether), poly(olefin), poly(norbornene), poly(7-oxanorbornene) or poly(styrene) backbone comprising a side-chain substituent which is prone to interact with acidic or alkaline reactants. It further discloses a sensor device comprising a plurality of sensors of the above type, with the individual sensors being adapted to detect different species of analytes, respectively. These individual sensors may be realized with a common dielectric material which is modified individually realizing a corresponding plurality of dielectric layers having different analyte sensing functionalities. EP 2 239 561 A1 does not disclose any peptide for inclusion in its sensor.

U.S. Patent Application Publication n° 2011/089051 discloses a device for determining an analyte, comprising a first electrode and a second electrode, a sensor material in electrochemical communication with the first and second electrodes, wherein resistance to current flow between the first and second electrode is affected by the sensor material, wherein the sensor material comprises a plurality of carbon nanotubes and a polymer material integrally connected to at least a portion of the plurality of carbon nanotubes, such that the carbon nanotubes are substantially contained within the polymer material, and wherein the analyte, if present, interacts with the sensor material to affect resistance to current flow between the first and second electrodes, thereby generating a signal in the device by which the analyte is determined. The polymer material comprises a conjugated polymer such as a polymer or copolymer of thiophene, or hexafluoroisopropanol substituted polythiophene, or poly(3-hexylthiophene). The sensor material may further comprise a binding site such as a peptide. The carbon nanotubes may also be functionalized or substituted with a peptide.

U.S. Patent Application Publication n° 2012/101022 discloses composi-tions comprising one or more [pi]-conjugated oligopeptides having a structure peptide-[(organic electronic unit)-peptide]n wherein n is an integer from 1 to 10, the organic electronic unit is an [alpha]-oligothiophene, an oligophenylene, an oligo(p-phenylene vinylene), and each peptide can be the same or different and comprises from 2 to 100 naturally occurring amino acid residues or variants thereof. The peptide-[(organic electronic unit)-peptide]n structure can be prepared by providing an organic electronic unit comprising a free carboxylic acid moiety and a protected amine moiety, and contacting the organic electronic unit with one or more protected amino acids under solid-phase peptide synthesis conditions. It also suggests assembling these [pi]-conjugated oligopeptides into sensor arrays for detection of biological interaction or to measure electrical activity of a tissue. U.S. 2012/101022 does not disclose these [pi]-conjugated oligopeptides for use in an organic field-effect transistor. Similarly, Schillinger et al in Advanced Materials (2009) 21:1562-7 disclosed the synthesis of a biomimetic symmetrically substituted ABA hybrid by combining a central quaterthiophene semiconductor segment (B) with two peptide-poly(ethylene oxide) conjugates (A), wherein the peptide is Gly-(Thr-Val)₃-Gly-aPhe-Gly. However no binding affinity is disclosed for this peptide.

There are many analytes for which selective detection is of high commercial value. These namely include explosives such as, but not limited to, 2,4,6-trinitrotoluene (hereinafter TNT) and 2,4-dinitrotoluene (hereinafter DNT). Goldman et al in Anal. Chim. Acta (2002) 457, 13-19, investigating the selection of peptides for the detection of TNT in seawater, identified the TNT binding dodecapeptide Trp-His-Arg-Thr-Pro-Ser-Thr-Leu-Trp-Gly-Val-Ile, and demonstrated reproducible detection of TNT at 10 mg/l.

Cerruti et al in Anal. Chem. (2009) 81:4192-9 disclosed immobilization of a peptide with selective binding capability for TNT or DNT by amine coupling with epoxy groups of poly(ethylene-co-glycidyl methacrylate), and coating of the peptide-polymer composite onto the surface of a quartz crystal microbalance sensing platform, thus for mechanical detection. The relevant peptides used in this study comprise 16 amino-acids.

Jaworski et al in Langmuir (2011) 27:3180-7 disclosed the synthesis of polydiacetylene-peptide conjugates wherein the peptide is Trp-His-Trp, a TNT binding motif, for use in a colorimetric sensor.

Other target analytes for selective detection that are essential to avoid risks for both human and environmental health include contaminants in food and environment such as toxins, viruses, proteins, pathogens and enteric bacteria.

Kuang et al in ACS Nano (2010) 4(1) 452-458 disclose the synthesis of a terminiunblocked diblock P1ASP1C peptide His-Ser-Ser-Tyr-Trp-Tyr-Ala-Phe-Asn-Asn-Lys-Thr-Gly-Gly-Gly-Gly-Trp-Phe-Val-Ile by fusing the four amino-acids peptide Trp-Phe-Val-Ile, via a tetraglycine linker, to the C-terminal end of a dodecapeptide His-Ser-Ser-Tyr-Trp-Tyr-Ala-Phe-Asn-Asn-Lys found in the antennal-specific protein-1 (ASP1), an odorant binding protein from honeybee, *Apis mellifera.* When used to functionalize the surface of single-wall carbon nanotubes in a field effect transistor, the diblock P1ASP1C peptide exhibited a selective response to TNT upon exposure to TNT (12 ppb) by introducing the vapors directly onto the device surface.

Although sensors for gaseous and aqueous analytes are widely available at little cost, e.g. from EP 2 239 561 A1, they usually are power-consuming, run at relatively high temperatures, and are produced by processes that are not compatible with high volume printing processes. More important, their response is not selective for a particular analyte and, as outlined in EP 2 239 561 A1, an array of sensors is required for analyte discrimination, or only particular classes of analytes can be detected.

Therefore, one problem addressed by the present invention is the selective, reliable and cost-effective detection of analytes by means of organic field-effect transistors. Another problem addressed by the present invention is the proper design and production of organic field-effect transistors including peptides with short chains for simplicity and cost reasons.

### SUMMARY OF THE INVENTION

The above needs in the art are now effectively resolved by means of the various aspects of the invention, including:
- a sensor device based on an organic field-effect transistor as defined in claim 1,
- a method to produce said sensor device as defined in claim 14,
- a method for detecting an analyte by operating said sensor device according to claim 15,
- a polymer blend incorporating an oligopeptide sequence as defined in claim 16, and
- the use of a polymer blend as a component of a dielectric layer, an intermediate layer, or a semiconductor layer of an organic field-effect transistor, as defined in claim 19.

### DEFINITIONS

The term "oligopeptide" as used herein, unless stated otherwise, refers to a short size polymer sequence wherein the monomers are amino acids (identical or different) joined together by amide-type covalent bonds. An oligopeptide sequence contains at least two such monomers, preferably at least four such monomers.

The term "amino acid" as used herein, unless stated otherwise, refers to any compound comprising at least one amino group, and at least one carboxyl group. The amino acids present in the oligopeptide recognition sequence of the present invention may be of natural or synthetic origin. Such amino acids may have the D or L configuration. Useful natural amino acids can be abbreviated according to the following standard 3-letter codes: Alanine (Ala), Arginine (Arg), Aspartic acid (Asp), Asparagine (Asn), Cysteine (Cys), Glutamic acid (Glu), Glutamine (Gin), Glycine (Gly), Histidine (His), Isoleucine (Ile), Leucine (Leu), Lysine (Lys), Methionine (Met), Phenylalanine (Phe), Serine (Ser), Threonine (Thr), Tryptophane (Trp), Tyrosine (Tyr) and Valine (Val). Useful non-natural amino acids can be obtained by derivatization techniques well known to the skilled person in the field of peptides. Amino acids having nucleophilic side chains may if necessary, at any time during the process, be protected in their side chain for incorporation into the oligopeptide sequence of the present invention, protecting groups for this purpose being well known from the skilled person in peptide technology.

### DETAILED DESCRIPTION OF THE INVENTION

A first aspect of the present invention broadly relates to a sensor device for selectively detecting an analyte, comprising an organic field-effect transistor comprising an organic polymeric semiconductor layer connecting a source electrode and a drain electrode, and further comprising a gate electrode separated from said organic polymeric semiconductor layer by a dielectric layer, wherein said organic field-effect transistor further comprises an oligopeptide recognition sequence having from 4 to 12 amino-acids which is selective with respect to, or has selective affinity for, the analyte.

As will be readily understood by the person skilled in the art, the type and size (in terms of amino-acid units) of the oligopeptide recognition sequence highly depends upon the kind of analyte in order to reach selectivity. In one embodiment, the first aspect of the present invention relates to a sensor device wherein the oligopeptide recognition sequence comprises from 4 to 6 amino-acids. In other useful embodiments, the first aspect of the present invention relates to a sensor device wherein the oligopeptide recognition sequence comprises up to 8 amino-acids, or up to 10 amino-acids. Generally speaking, for cost reasons, it is desirable to incorporate an oligopeptide recognition sequence with as few amino-acids as possible without significantly loosing selectivity in the detection process. Thus, in specific situations, a tripeptide (three amino-acids) may also prove to be useful for performing the present invention. There is no general rule for the kind of amino-acid units to be present in the oligopeptide recognition sequence of this invention, their selection being only dictated by the level of selectivity for the detection of a particular analyte. In principle, suitable peptides with selective binding capabilities can be identified by using phage display techniques against the analyte of interest.

In one particular embodiment, the first aspect of the present invention relates to a sensor device wherein the oligopeptide recognition sequence is part of, or in contact with, or is bound to, the organic polymeric semiconductor layer. Based on detailed knowledge in the art the skilled person is able to determine, with a reasonable amount of experimentation, which organic polymer (within the broad range of possible dielectric polymers detailed below) is best suited for binding to the selected oligopeptide recognition sequence. A more particular embodiment relates to a sensor device wherein the organic polymeric semiconductor is functionalized with the oligopeptide recognition sequence, as explained hereinafter in more details.

The organic polymer preferably is a polymeric dielectric material with a dielectric constant ε preferably ranging from 2.4 to 10. Suitable examples thereof are disclosed for instance by Z. Ahmad (2012), Polymeric Dielectric Materials, chapter 1, and include but without limitation (in the following list, the number between parentheses following the polymer name corresponds to an average value of the dielectric constant of said polymer): poly(2-chlorobutadiene) (ε from 4 to 10), polyvinylidene fluoride (6), polyvinylchloride (3), acrylonitrile-butadiene-styrene copolymers (2.5-3.5), polyimide (2.8-3.5), fluorinated polyimide (2.5-2.9), polycarbonate (2.8-3.4), polyamide (2.5-2.6), Nylon (3.2-5), poly-(4,4'-oxydiphenylene-pyromellitimide) marketed under the tradename Kapton (2.9-3.9), polystyrene (2.4-3), polypropylene oxide, poly-α-methylstyrene, divinyltetramethyldisiloxane-bis(benzocyclobutane), poly(methylmethacrylate), poly(vinylalcohol), crosslinked poly(vinylphenol), poly(acrylate), poly(acrylamide), poly(vinylether), polyethylene (2.5), poly(ethylene-co-maleic anhydride), poly(styrene-co-maleic anhydride), poly(norbornene), poly(7-oxanorbornene), arylene and heteroarylene vinylene polymers (such as, but not limited to, those recited in U.S. Patent No. 7,259,228, herein incorporated by reference), conjugated iptycenylene polymers (such as, but not limited to, those recited in EP 2.116.528, herein incorporated by reference), poly(3-hexylthiophene), 3-substituted thiophene polymers (such as, but not limited to, those recited in WO 2011/069554, herein incorporated by reference), and copolymers combining two or more of the above recited repeating units.

Another particular embodiment of the first aspect of the present invention relates to a sensor device wherein the oligopeptide recognition sequence is incorporated into the organic polymeric semiconductor layer in a proportion ranging from 0.5% to 10% by weight, or from 1% to 5% by weight, or from 1.5 to 3% by weight. The suitable proportion of incorporation of the oligopeptide recognition sequence into the organic polymeric semiconductor layer depends upon the type of oligopeptide sequence and the kind of polymeric layer, and can be determined by the skilled person without undue burden, by means of a small series of experiments aiming at reaching the optimal detection level and sensing quality. The suitable proportion of incorporation may also take into account the balance between the level of selective detection and the cost induced by the amount of peptide (usually the most expensive component of the system).

Another particular embodiment of the first aspect of the present invention relates to a sensor device, wherein the oligopeptide recognition sequence may be part of the dielectric layer.

The kind of amino-acids present in the oligopeptide recognition sequence are highly dependent upon the desired selective affinity for the analyte of interest. A useful embodiment of the first aspect of the present invention, especially when the analyte is an explosive chemical such as a nitrogen-containing aromatic compound, relates to a sensor device wherein the oligopeptide recognition sequence comprises 4 amino-acids, preferably four different amino-acids, selected from the group consisting of Trp, Phe, Val, Ile, His, Pro and Asn, and wherein at least one amino-acid is optionally protected on its side chain. Representative but non-limiting examples of such tetrapeptides are Trp-Phe-Val-Ile-OCH₃, and His-Pro-Asn-Phe-OCH₃.

This invention is widely applicable to the selective detection of a vast array of analytes. The applicability of the invention is mainly limited by the existence of an oligopeptide recognition sequence selectively binding to the analyte of interest. The skilled person understands that the invention is of major interest when the analyte is a compound which raises health, safety or security concerns to the public, and when its accurate detection can be easily performed within a short period of time, by means of a portable device whilst affording detection at very low detection limits. Therefore, in one embodiment of the first aspect of the present invention, the analyte may be selected from the group consisting of explosive chemicals (e.g. nitro-aromatic compounds), biomarkers, other peptides, drugs (e.g. cocaine), antibiotics, vitamins and hormones (e.g. insulin). For instance, table 1 of the review article from Luo et al in Chem. Soc. Rev. (2013) 42, 5944-5962 lists certain biomarkers that are suitable for field-effect transistor (FET) biosensors, together with their detection limit. Such biomarkers are also suitable for detection by means of the present invention and include, among others: cancer antigen-125 and insulin-like growth factor II (both related to ovarian cancer), carcinoembryonic antigen, epidermal growth factor receptor (related to breast cancer), hemoglobin-A1c (related to diabetes), immunoglobulin E (related to allergy), mucin-1 (related to cancer), nucleocapsid protein (related to SARS), osteopontin and prostate specific antigen (both related to prostate cancer), and thrombin (related to atherothrombosis).

In a very specific embodiment of the first aspect of the present invention, either the analyte is 2,4,6-trinitrotoluene and the oligopeptide recognition sequence may be Trp-Phe-Val-Ile-OCH₃, or the analyte is 2,4-dinitrotoluene and the oligopeptide recognition sequence may be His-Pro-Asn-Phe-OCH₃.

The sensor device of this invention is not limited to the structure as disclosed hereinabove but may further comprise further functional layers, for instance at least one additional intermediate layer located between the organic semiconductor layer and the dielectric layer.

The sensor device of this invention may be designed in a number of different ways, in terms of shape and thickness of each layer. For instance the gate electrode may be shaped to enable direct contact of the dielectric layer with a medium containing the analyte. The sensor may also be conveniently assembled on a flexible substrate.

A second aspect of the present invention broadly relates to process for producing an analyte sensor device as defined in any one of the various embodiments of the first aspect of the present invention, said process comprising the steps of:
- providing an organic field-effect transistor comprising an organic polymeric semiconductor layer connecting a source electrode and a drain electrode, and further comprising a gate electrode separated from said organic polymeric semiconductor layer by a dielectric layer, and
- incorporating an oligopeptide recognition sequence which is selective with respect to the analyte into either the organic polymeric semiconductor layer or the dielectric layer, or both.

In a specific embodiment of the process of the second aspect of the present invention, there is provided an organic field-effect transistor further comprising an intermediate layer located between the semiconductor layer and the dielectric layer, in which case the oligopeptide recognition sequence may also be incorporated into said intermediate layer.

Among various advantages of this process, apart from the specific step of incorporating an oligopeptide recognition sequence into the organic polymeric semiconductor layer or the dielectric layer, it does not require substantial modifications to the standard organic field-effect transistor manufacturing technology. Hence it is easily applicable without significant effort in process design.

For the sake of conciseness, every embodiment of the organic polymeric semiconductor layer, the oligopeptide recognition sequence and the analyte, as well as any combination of such embodiments, is not repeated here, but is applicable in the same manner as in the first aspect of the invention.

A third aspect of the present invention broadly relates to a method for selectively detecting an analyte, the method comprising the steps of:
- providing a sensor device as defined in any one of the various embodiments of the first aspect of the present invention,
- exposing a surface of said sensor device to the analyte,
- applying a voltage to the gate electrode of said sensor device, and
- detecting a change in the dielectric behavior of the gate electrode, said change being indicative of the presence of the analyte.

Among various advantages of this method, apart from providing the specific sensor device of this invention, it does not require substantial modifications to the standard detection methods based on organic field-effect transistors.

For the sake of conciseness, every embodiment of the sensor device or the analyte, as well as any combination of such embodiments, is not repeated here, but is applicable in the same manner as in the first aspect of the invention.

A fourth aspect of the present invention broadly relates to certain polymer blends being useful as a component of a layer of an organic field-effect transistor for the detection of analytes. The polymer blends of this invention comprise (a) a polythiophene polymer or copolymer and (b) a polymer (P) functionalized with an oligopeptide sequence having from 4 to 12 amino-acids, wherein the weight ratio (b)/(a) ranges from 9:1 to 1:9, and wherein the polymer (P) is an organic polymer with a dielectric constant ranging from 2.4 to 10. In a preferred embodiment, the polymer blends of this invention consist of the mixture of polymers (a) and (b).

One embodiment of this fourth aspect of the present invention relates to certain polymer blends as defined herein, wherein the oligopeptide sequence having from 4 to 12 amino-acids is selective with respect to, or has selective affinity for, an analyte. Methods for the functionalization of an organic polymer with an oligopeptide sequence are well known in the art. The organic polymer (P) as well as the analyte of interest are as defined with respect to the first aspect of the present invention.

Another embodiment of this fourth aspect of the present invention relates to certain polymer blends as defined herein, wherein the oligopeptide sequence having from 4 to 12 amino-acids represents from 2% to 20% by weight, for instance from 3% to 10% by weight, of the organic polymer (P).

Another embodiment of this fourth aspect of the present invention relates to certain polymer blends as defined herein, wherein the oligopeptide sequence represents from 0.5% to 10% by weight, for instance from 1 % to 5% by weight, of the polymer blend.

For the sake of conciseness, every embodiment of the organic dielectric polymer (P) and/or the polythiophene polymer or copolymer (a) is not repeated here, but is applicable in the same manner as in the first aspect of the present invention.

A last aspect of the present invention relates to the use of a polymer blend as defined in the fourth aspect of the invention, including any one of the specific embodiments thereof, as a component of a dielectric layer or a semiconductor layer, and/or an intermediate layer located between the semiconductor layer and the dielectric layer, of an organic field-effect transistor. This is especially useful for providing an organic field-effect transistor capable to selectively detect an analyte for which the oligopeptide sequence having from 4 to 12 amino-acids present in the polymer blend has selective affinity.

The following examples are given for illustrative purpose only, and should not be understood as limiting in any way the scope of this invention, which is solely defined by the appended claims.

### EXAMPLE 1 -sensor device manufacture and operation

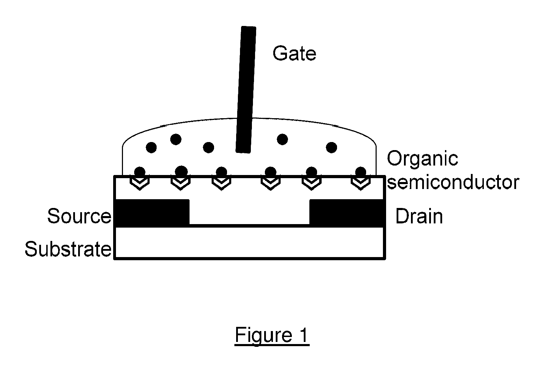

A first embodiment of the invention is illustrated by the water-gated OFET schematically shown in Figure 1 with the recognized analyte.

Bottom contact water-gated sensor devices were fabricated as follows. Glass or Si/SiO₂ substrates were cleaned by sequential rinsing with methanol, acetone and isopropanol, followed by drying under a flow of nitrogen. The glass substrates were then exposed to UV/ozone for 20 minutes and oxygen plasma (60 W) for 2 minutes. 3 nm of Cr was thermally evaporated followed by evaporation of 40 nm of Au through a shadow mask to form source and drain (S-D) contacts. Substrates were immersed for 24 hours in a 1 mM ethanol solution of pentafluorobenzenethiol (PFBT) to form self-assembled monolayer (SAM) in which the molecules are chemisorbed to the gold by a thiolate link. The SAM-coated substrates were rinsed with solvent to remove physically absorbed material before the blend of 10% peptide-poly(methyl methacrylate) (PMMA-P_{0.1}) in chlorobenzene (10 mg/ml) and poly(3-hexylthiophene) (P3HT) in chlorobenzene (10 mg/ml), mixed in the ratio of 7:3, was spin-coated on the substrates at 1500 rpm for 1 minute followed by annealing for 1 hour at 130°C, or the blend of P_{0.1-}PMMA in dichlorobenzene (7 mg/ml) and poly(2,5-bis(3-hexadecylthiophen-2-yl)thieno[3,2-b]thiophene) (herein referred as PBTTT, R=-C₁₆H₂₉) in dichlorobenzene (7 mg/ml), mixed in the ratio of 1:1 was spin-coated on the substrates at 1500 rpm for 1 minute followed by annealing for 20 minutes at 160°C. In these devices the channel length L and the channel width were 60 µm and 1 mm respectively. Fabricated OFETs including P3HT:PMMA-P or PBTTT:PMMA-P blend as the semiconductor were combined with 4 µl droplet of pure water or analyte in aqueous solution and a tungsten wire dipped into the droplet as the gate dielectric and gate electrode respectively. Devices were fabricated with PMMA-P_{0.1} containing the DNT and TNT selective peptides and electrical characteristics of these devices were recorded in the presence of aqueous solution containing target molecules and were compared with the performance of the pure water-gated transistors. Each experiment with a droplet of DNT or TNT solution was performed and recorded immediately after a solution drop was formed on the channels.

### EXAMPLE 2 - performance of P3HT:PMMA-P(DNT/TNT) OFET for the detection of analyte in aqueous solution

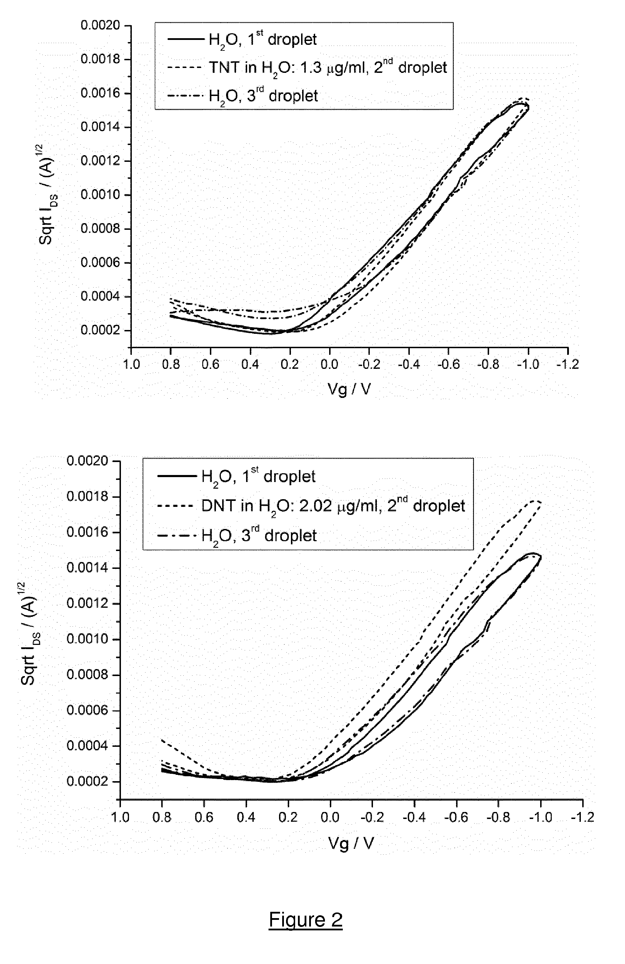

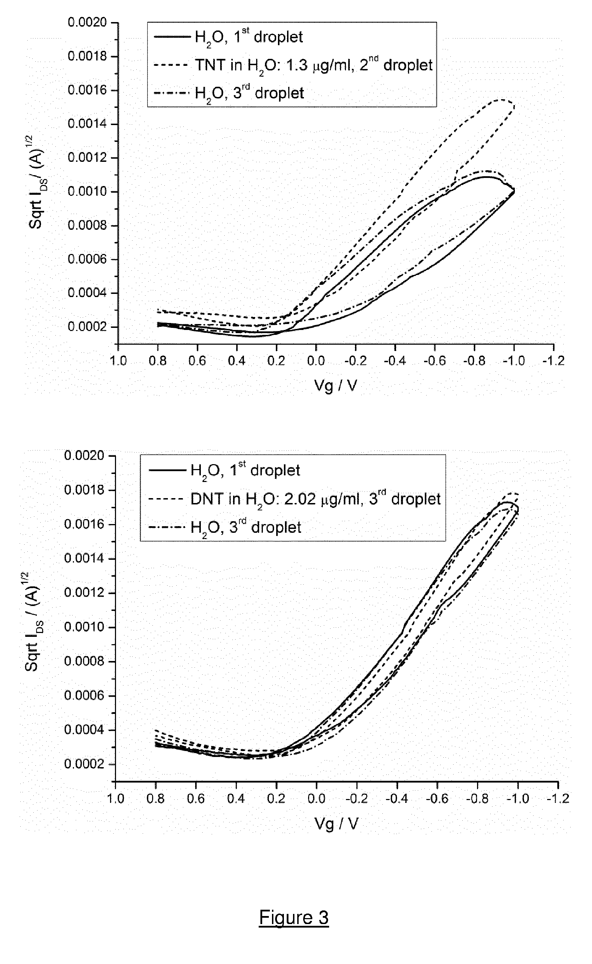

The transfer curves from the P3HT:PMMA-P(DNT) and P3HT:PMMA-P(TNT) water-gated transistors are presented in Figures 2 and 3 respectively.

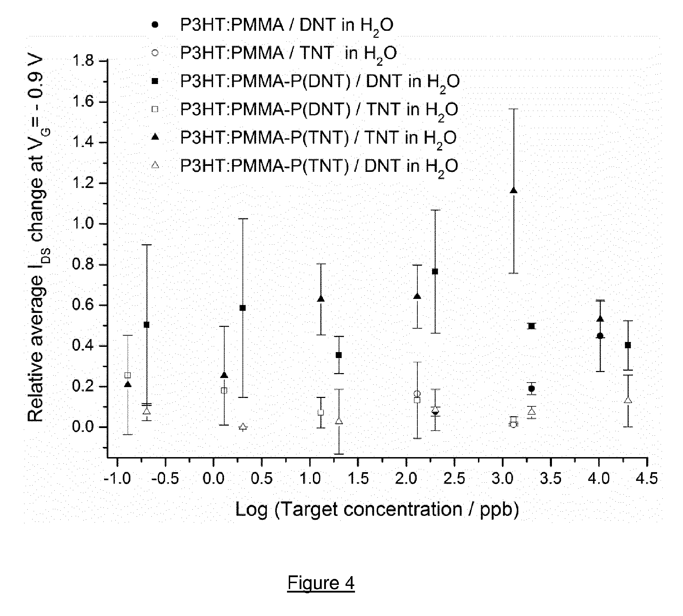

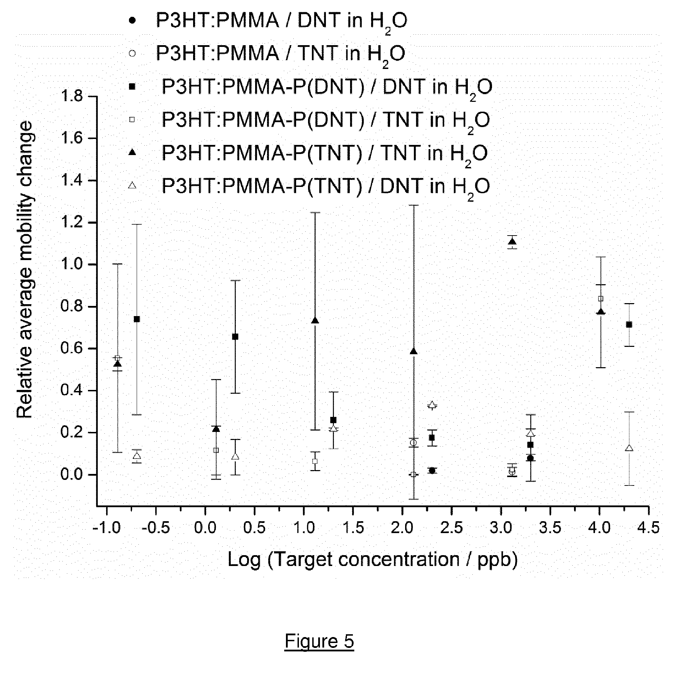

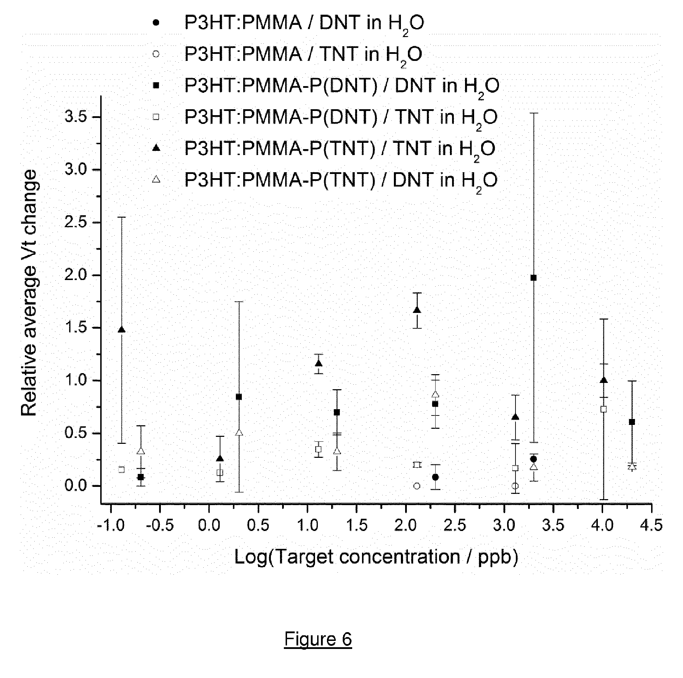

The plots of the average relative changes of I_{DS}, mobility and Vₜ of P3HT:PMMA-P and P3HT:PMMA transistors are presented in Figures 4-6 with reference to DNT and TNT target concentrations. The logarithm of the target DNT and TNT concentration ranged from 0.2 ppb to 20 ppm and from 0.13 ppb to 13 ppm respectively.

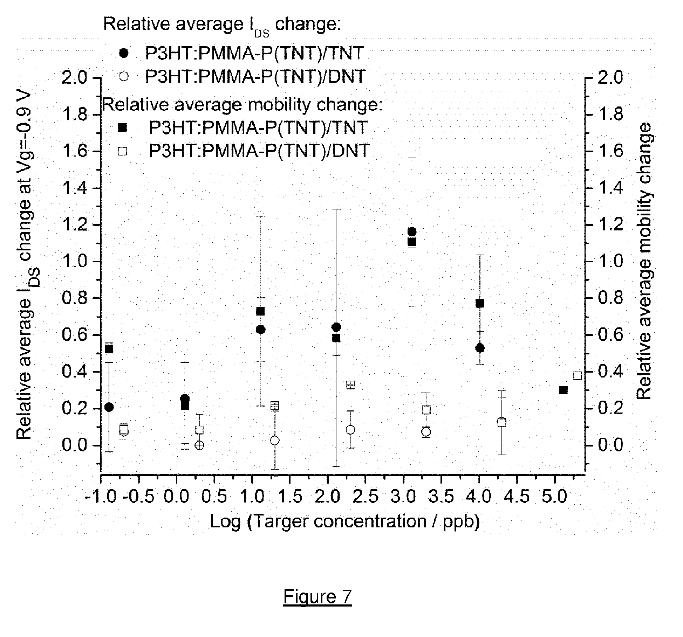

Exposure of electrolytically-gated P3HT:PMMA-P transistors to DNT and TNT showed that peptide recognition elements are able to effectively discriminate these nitro-aromatics at sub-ppm concentrations (figures 4-6). All tested sensor devices showed responses in a wide concentration range from 0.13 ppb to 20 ppm for the target DNT/TNT detection and could potentially discriminate these analytes at 0.2 ppb and 0.13 ppb for DNT and TNT respectively. Analysis of the average OFET parameters (I_{DS}, mobility and Vₜ) changes revealed that more prominent responses were observed in the devices incorporating P3HT:PMMA-P(TNT) when exposed to TNT solutions. Sensor devices based on P3HT:PMMA-P(TNT) showed not only a selective response but they also exhibited an increase in the response with analyte concentration in the range 0.13 ppb-2.02 ppm. These changes are more visible in Figure 7.

Regeneration of the sensor devices operating in water was observed after removing the analyte solution from the channel, drying and depositing a new 4 µl droplet of pure water. This experiment revealed that the I-V characteristics from these water-gated sensor devices were similar to those originally obtained.

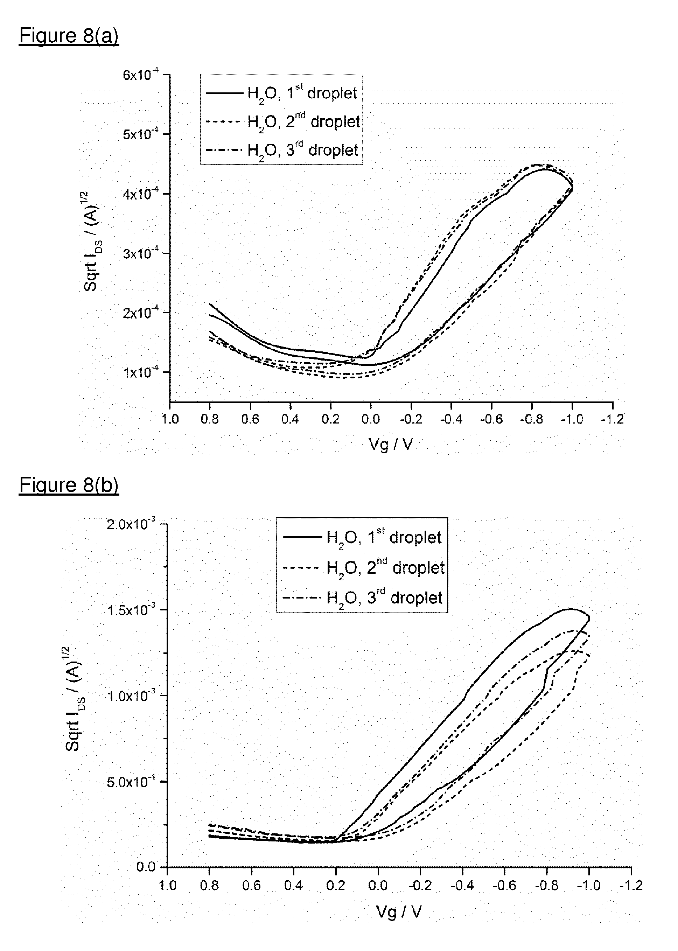

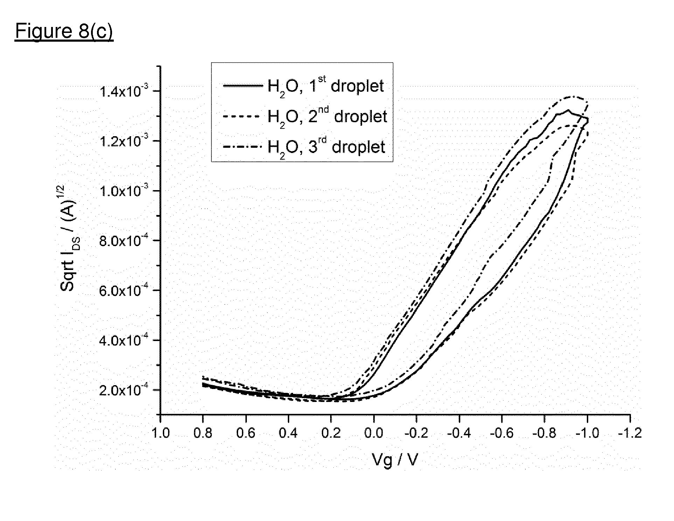

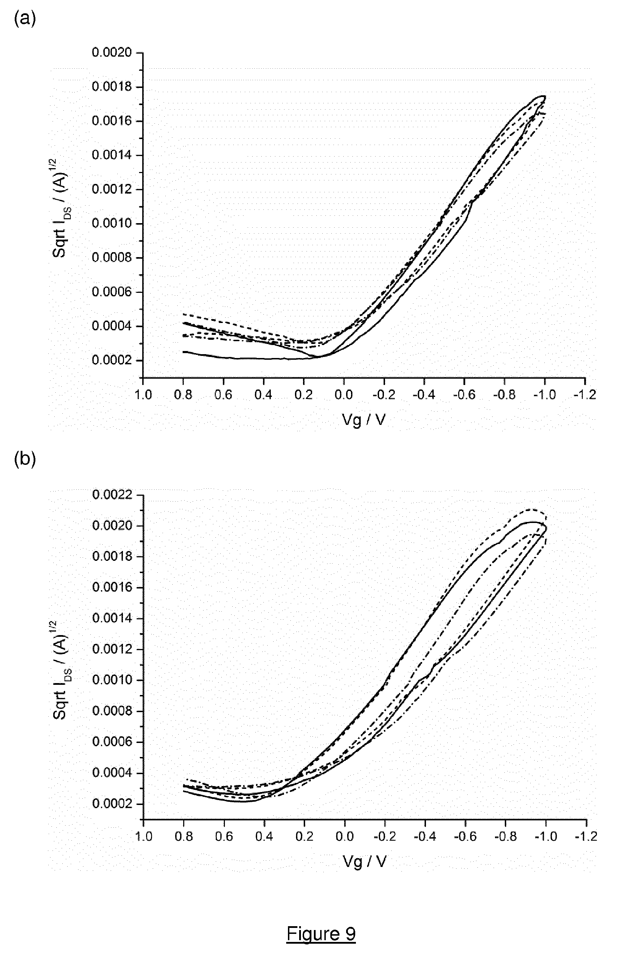

Transfer curves of the P3HT:PMMA, P3HT:PMMA-P(TNT) and P3HT:PMMA-P(DNT) water-gated transistors with a tungsten gate electrode are shown in Figures 8a, 8b and 8c respectively. Typical electrical characteristics of P3HT:PMMA-P(DNT) and P3HT:PMMA-P(TNT) water-gated devices recorded after re-probing the tungsten gate electrode are shown in Figures 9a and 9b respectively.

### EXAMPLE 3 - performance of PBTTT:PMMA-P(TNT) OFETs for the detection of analyte in aqueous solution

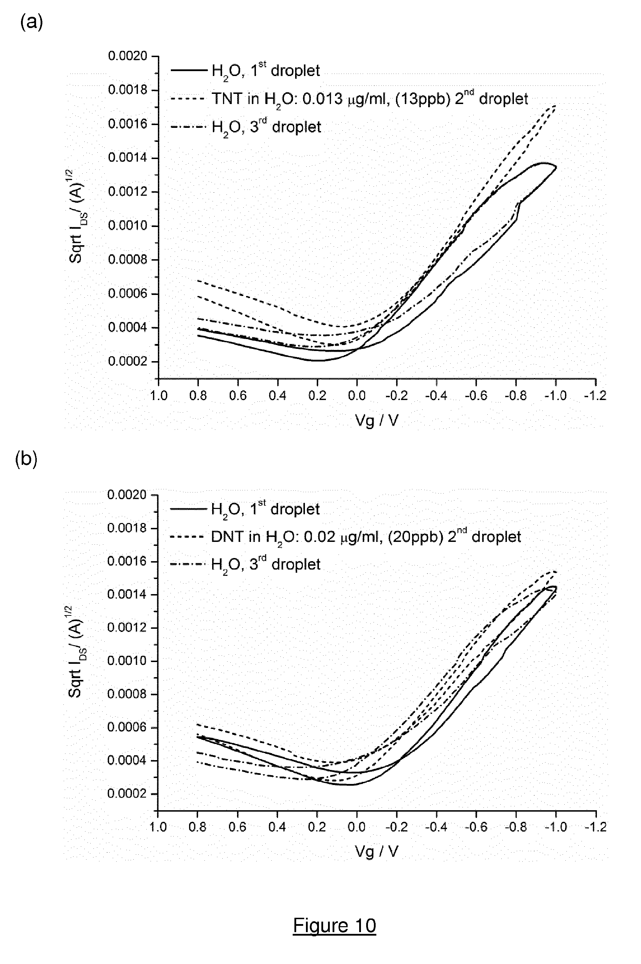

The transfer curves from the PBTTT:PMMA-P(TNT) TNT (a) and DNT (b) water-gated devices are presented in Figure 10.

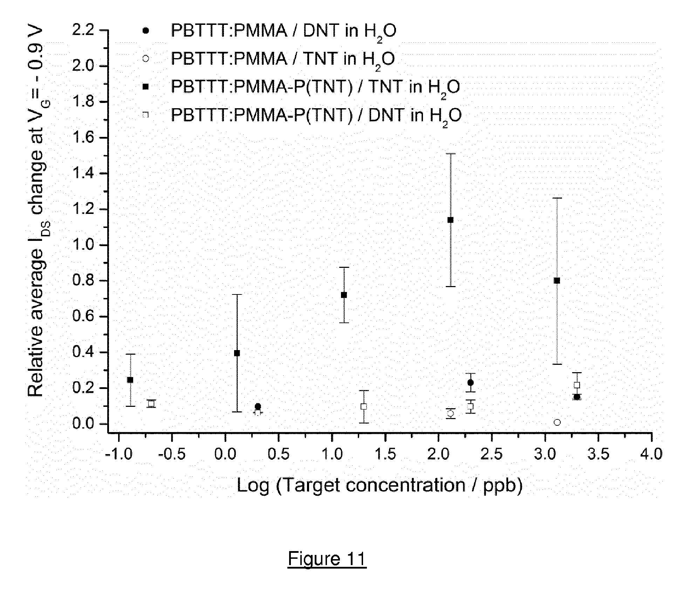

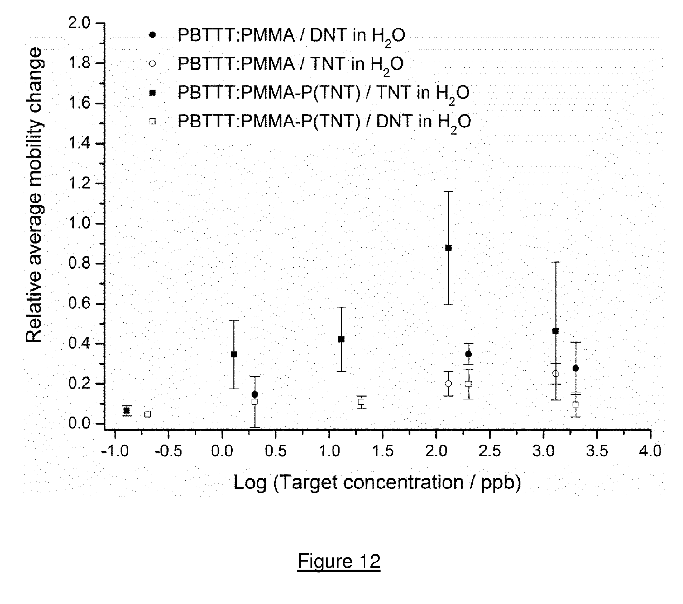

Relative average I_{DS} changes at V_{g} = -0.9 V of PBTTT:PMMA-P(TNT) pure water gated transistors and the same DNT and TNT water gated transistors with the tungsten gate electrode are shown in Figure 11. The plot of I_{DS} changes is presented with reference to DNT and TNT target concentrations that ranged from 0.2 ppb to 2 ppm and from 0.13 ppb to 1.3 ppm for DNT and TNT respectively. Figure 11 shows that significant changes in I_{DS} at V_{g}=-0.9 V for PBTTT:PMMA-P(TNT) sensor devices were observed after introduction of the target TNT aqueous solution to these devices. Crossover experiments on these devices exhibited low I_{DS} changes at V_{g}= -0.9 V. The relative average I_{DS} changes of reference PBTTT:PMMA transistors after introduction of DNT and TNT target solutions were negligible. The change in the average values of mobility for test PBTTT:PMMA-P(TNT) and reference PBTTT:PMMA devices from pure water gated transistors to the same devices in the presence of TNT and DNT are presented in Figure 12. Relative average mobility changes for these sensor devices were similar to those obtained for I_{DS} at V_{g}= -0.9 V.

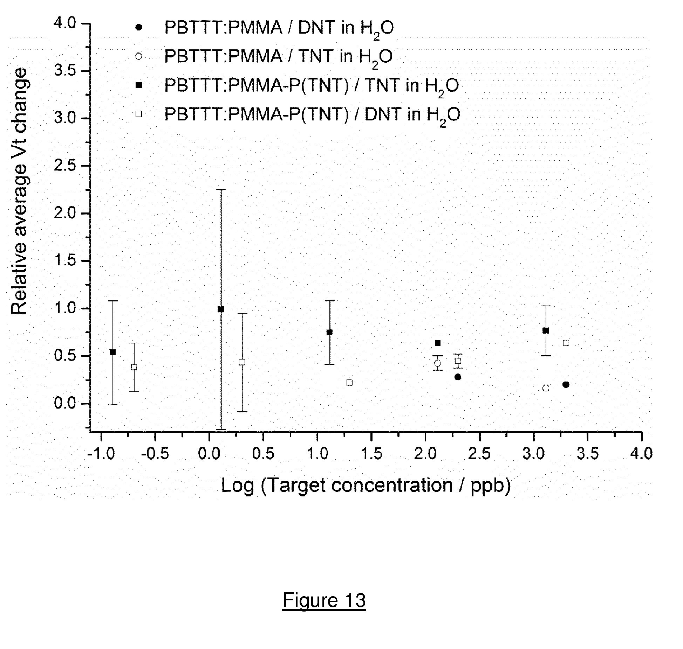

The changes in average value of Vₜ of these transistors from pure water gated devices, as a function of target concentration, are presented in Figure 13. This experiment shows that increasing the target concentration did not significantly affect the Vₜ of these devices.

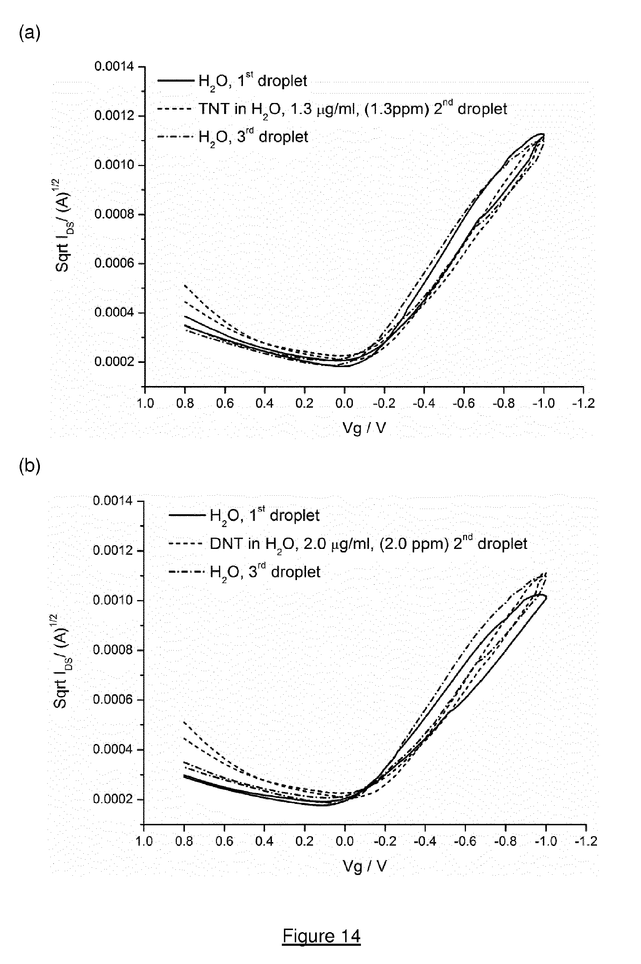

Figure 14 presents the transfer curves of the reference PBTTT:PMMA TNT (a) and DNT (b) water-gated transistors with a tungsten gate electrode.

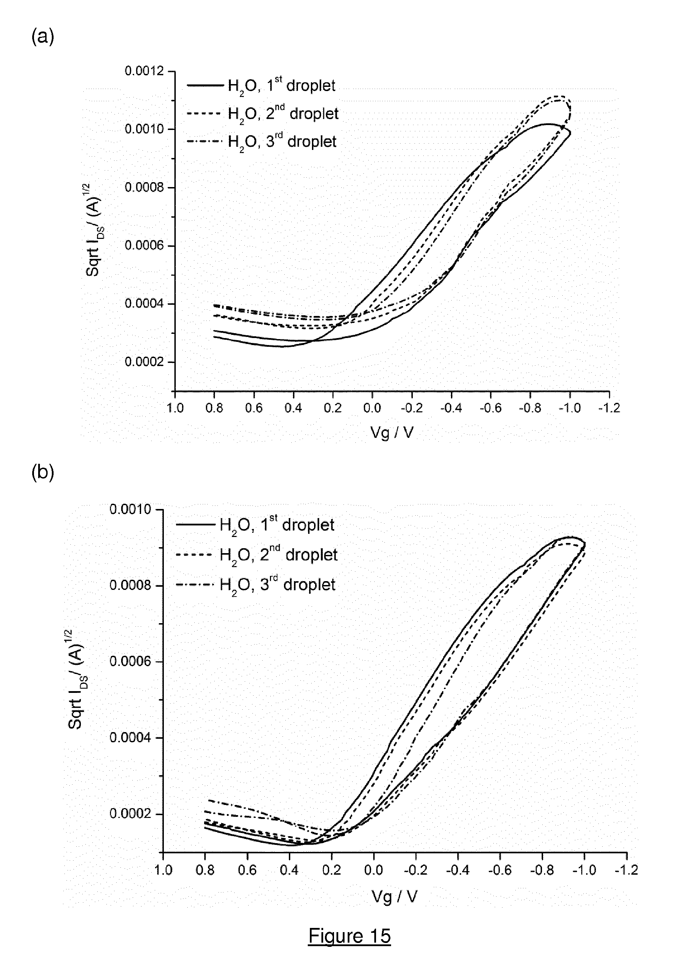

Figure 15 presents the transfer curves of the test PBTTT:PMMA-P(TNT) (a) and the reference PBTTT:PMMA (b) water-gated transistors with a tungsten gate electrode recorded after sequential placing of water drops on the channel.

### Example 4 - sensor device manufacture and operation for sensing in vapour phase

Top contact sensor devices were fabricated for sensing the analyte in vapour phase. The fabrication protocol includes the following steps:
- cleaning a Si/SiO₂ substrate by sequential rinsing with methanol, acetone and isopropanol, followed by drying under a flow of nitrogen;
- then exposure to UV/ozone for 20 minutes and an oxygen plasma (60 W) for 2 minutes;
- spin coating PMMA-P_{0.1} or PMMA-P_{0.05} in dimethylacetamide (5 mg/ml) at 3000 rpm for 1 minute followed by annealing at 220°C for 30 minutes. This is followed by spin coating the organic semiconductor IF-PTAA in trichloroethylene (10 mg/ml) at 3000 rpm for 1 minute;
- thereafter annealing the device at 80°C for 2 hours; and
- finally, thermally evaporating 100 nm of Au through a shadow mask to form source-drain contacts.

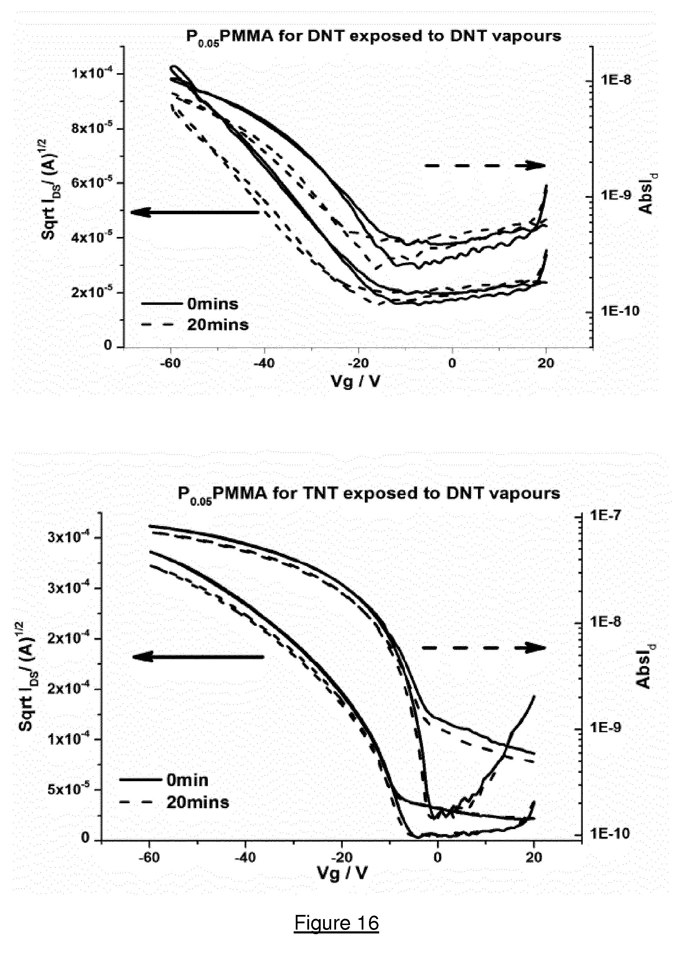

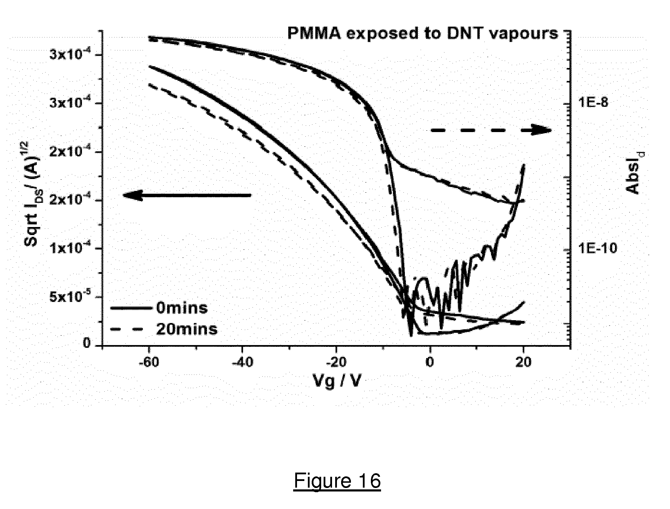

Devices were fabricated with peptide modified PMMA containing the DNT and TNT selective peptides and electrical characteristics were recorded in the presence of DNT vapour and compared with the performance of pure PMMA with peptide loading (Figure 16).

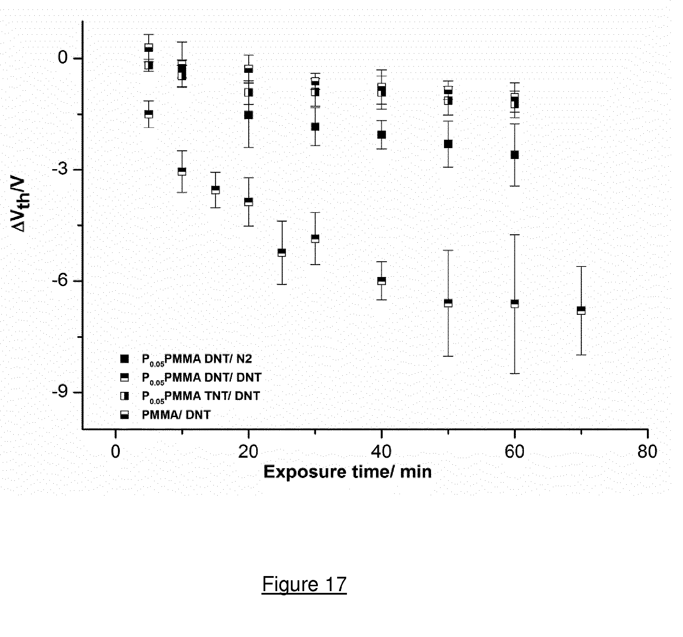

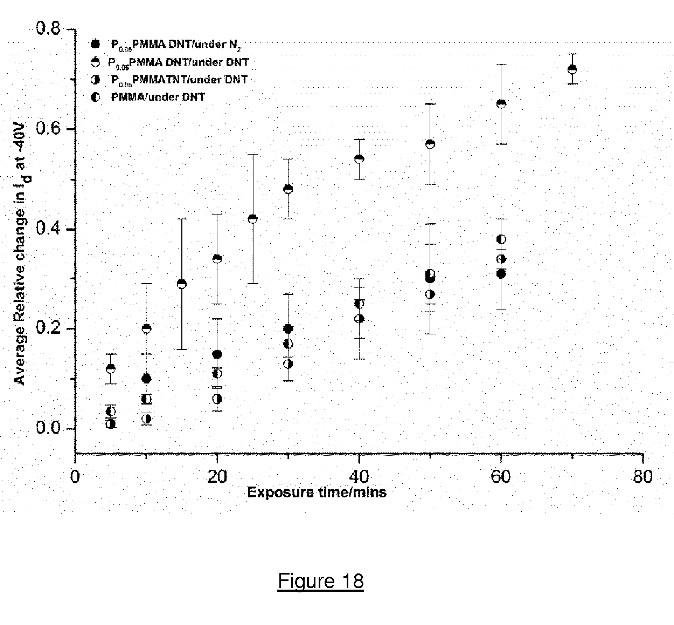

The average change in Vₜ and relative change in I_{DS} are presented in Figures 17 and 18 with exposure time of the analyte in vapour phase. Results are compared with exposing the PMMA-P devices to pure nitrogen.

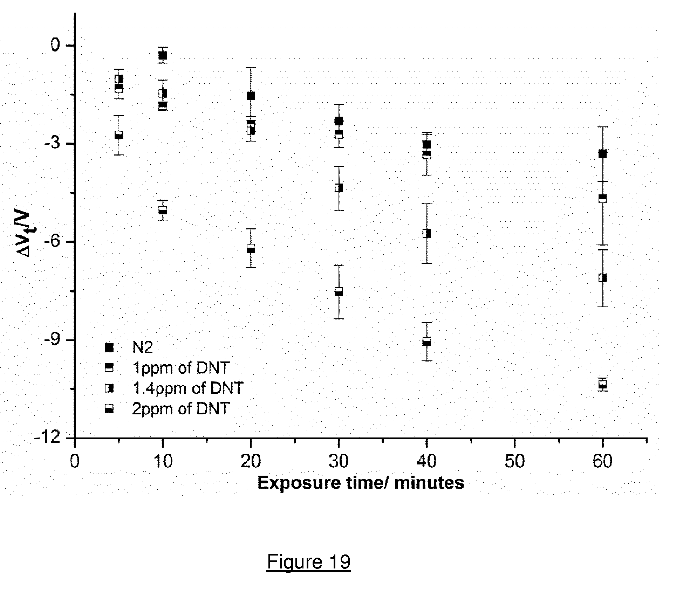

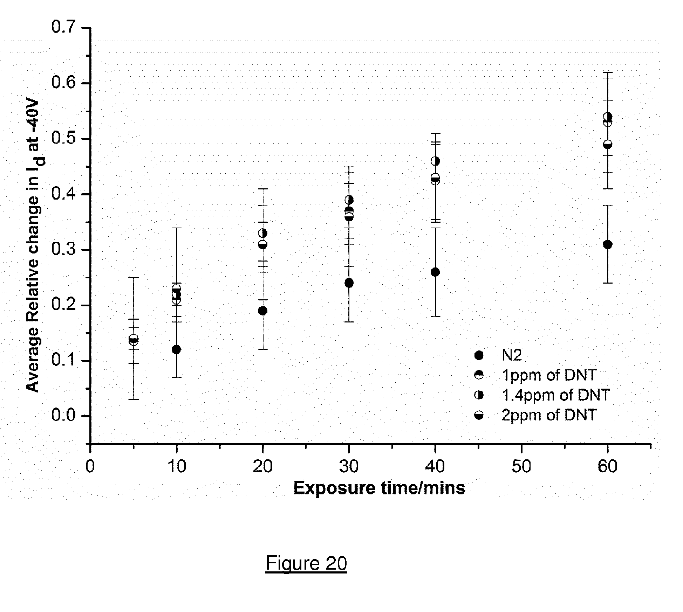

PMMA-P_{0.1} for DNT sensor devices were exposed to different concentrations of DNT vapours (Figures 19 and 20).

### EXAMPLE 5 -synthesis of DNT-sensing peptide-PMMA conjugates

The synthesis of peptide-PMMA conjugates containing a tetrapeptide specific to DNT proceeds according to the following scheme 1.

Carboxy-functional PMMA copolymers 1a-1c were reacted with the protected tetrapeptide His-Pro-Asn-Phe-OMe under the above conditions, using *O*-(benzotriazol-1-yl)-*N,N,N',N*'-tetramethyluronium tetrafluoroborate (TBTU) and *N,N-*diisopropylethylamine (DIPEA) as reagents and *N,N*-dimethylformamide (DMF) as a solvent. The reaction mixture is precipitated into isopropanol and purified by several precipitation steps into hexane. The structure of the peptide-PMMA conjugates 2a-2c was confirmed by Fourier Transform Infrared spectroscopy and H-NMR analysis. These peptide-PMMA conjugates 2a-2c are fully or partially soluble in both polar solvents (dimethylformamide) and apolar solvents (e.g. chloroform, chlorobenzene).

### EXAMPLE 6 -synthesis of DNT-sensing peptide-PTAA conjugates

The synthesis of peptide-PTAA conjugates containing a tetrapeptide specific to TNT or DNT proceeds according to the following scheme 2.

The structure of the peptide-PTAA conjugates 6a-6b was confirmed by Fourier Transform Infrared spectroscopy and H-NMR analysis.

### EXAMPLE 7 -sensor device manufacture and operation

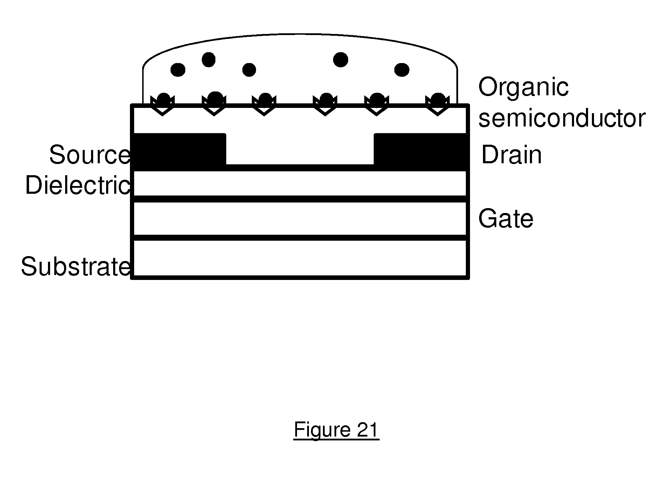

The OFET is schematically shown in Figure 21 with the recognized analyte.

Bottom contact recognition OFET devices were fabricated as follows. Glass substrates are cleaned with acetone and methanol, followed by drying under nitrogen. Aluminium was thermally evaporated onto glass substrates to a thickness of 150 nm. The aluminium was then anodised in a 1 mM solution of citric acid at 4 V and 5 nm of Cr was evaporated onto the samples, followed by 55 nm Au to form source and drain contacts with a channel length 60 µm and a channel width of 1000 µm. Octadecyltrichlorosilane (ODTS) was then spin-coated twice (consecutively) from trichloroethylene (TCE) onto the anodised films at 3000 rpm for 10 seconds. They were then left on a hot plate at 105°C for 20 minutes to dry. Contacts were then modified with 10 mM pentafluorobenzene thiol (PFBT). A blend of PBTTT (5 mg/ml) and PMMA-P(TNT) (10 mg/ml) in dichlorobenzene mixed in a ratio of 7:3 (PBTTT:PMMA-P(TNT) was spin-coated onto the films at 1500 rpm for 60 seconds. They are then left on a hot plate at 105°C for 20 minutes to anneal under nitrogen. The transistors were then characterised by dropping 7 µl of either deionized water or an analyte in aqueous solution, and then I-t measurements were taken.

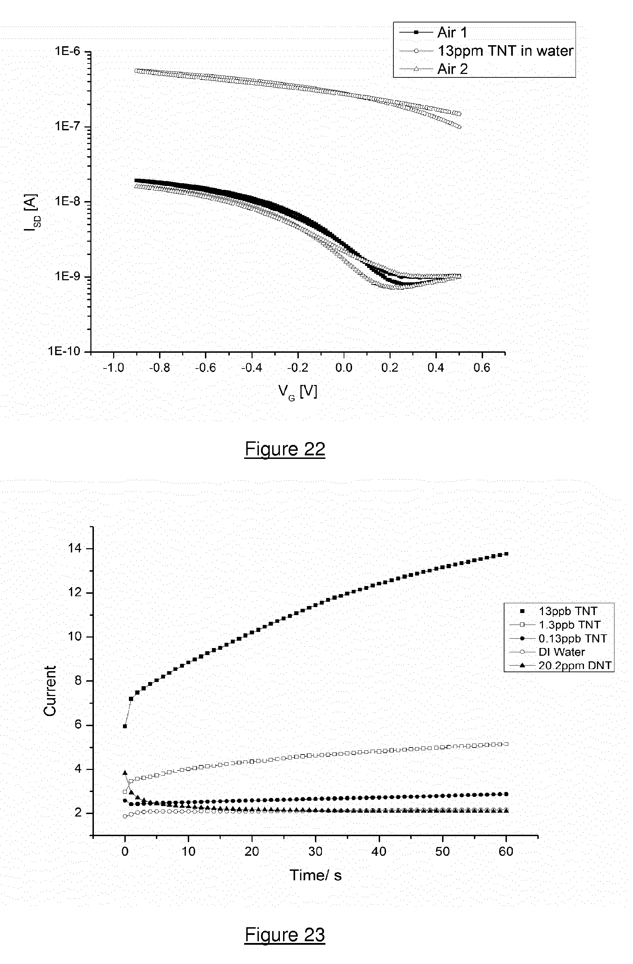

The transfer curves from PBTTT:PMMA-P(TNT) are presented in Figure 22. This transistor transfer curve shows measurements of the OFET in air before (Air 1) introduction of droplet of analyte (13 ppm TNT in water) to the channel. Air 2 shows recovery after removal of analyte droplet OFET channel.

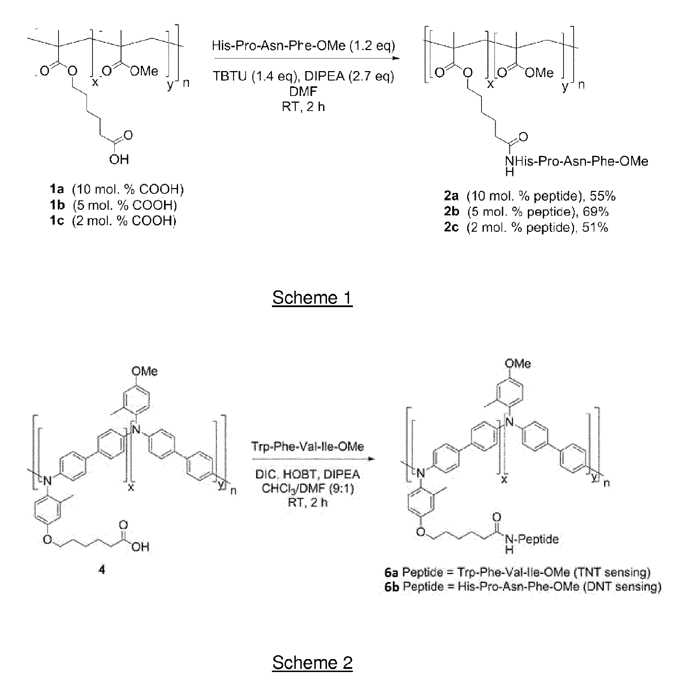

The OFET response to aqueous solutions of TNT, DNT and deionized (DI) water over time is shown in Figure 23.

When DI water and 20.2 ppm of DNT in water are introduced to the channel, the currents obtained are almost identical which is as expected. This is because the recognition peptide used for the OFET active layer has TNT incoporated and hence recognises the water and DNT analyte as the being same. On the other hand, the OFET does clearly discriminate 13 ppb, 1.3 ppb and 0.13 ppb concentrations of aqueous TNT analytes.

## Claims

1. A sensor device for selectively detecting an analyte, comprising an organic field-effect transistor comprising an organic polymeric semiconductor layer connecting a source electrode and a drain electrode, and further comprising a gate electrode separated from said organic polymeric semiconductor layer by a dielectric layer, wherein said organic field-effect transistor further comprises an oligopeptide recognition sequence having from 4 to 12 amino-acids which is selective with respect to, or has selective affinity for, the analyte.

2. A sensor device according to claim 1, wherein the oligopeptide recognition sequence comprises from 4 to 6 amino-acids.

3. A sensor device according to claim 1 or claim 2, wherein the oligopeptide recognition sequence is part of, or in contact with, or bound to, the organic polymeric semiconductor layer.

4. A sensor device according to claim 3, wherein the organic polymeric semiconductor is functionalized with the oligopeptide recognition sequence.

5. A sensor device according to claim 3 or claim 4, wherein the oligopeptide recognition sequence is incorporated into the organic polymeric semiconductor layer in a proportion from 0.5% to 10% by weight.

6. A sensor device according to any one of claims 1 to 3, wherein the oligopeptide recognition sequence is part of the dielectric layer.

7. A sensor device according to any one of claims 1 to 6, wherein the oligopeptide recognition sequence comprises 4 amino-acids selected from the group consisting of Trp, Phe, Val, Ile, His, Pro and Asn.

8. A sensor device according to any one of claims 1 to 7, wherein the oligopeptide recognition sequence is Trp-Phe-Val-Ile-OCH₃ or His-Pro-Asn-Phe-OCH₃.

9. A sensor device according to any one of claims 1 to 8, wherein the analyte is selected from the group consisting of explosive chemicals, nitro-aromatics, biomarkers, peptides, drugs, antibiotics and hormones.

10. A sensor device according to any one of claims 1 to 9, wherein either the analyte is 2,4,6-trinitrotoluene and the oligopeptide recognition sequence is Trp-Phe-Val-Ile-OCH₃, or the analyte is 2,4-dinitrotoluene and the oligopeptide recognition sequence is His-Pro-Asn-Phe-OCH₃.

11. A sensor device according to any one of claims 1 to 10, further comprising at least one additional intermediate layer located between the organic semiconductor layer and the dielectric layer.

12. A sensor device according to any one of claims 1 to 11, wherein the gate electrode is shaped to enable direct contact of the dielectric layer with a medium containing the analyte.

13. A sensor device according to any one of claims 1 to 12, being assembled on a flexible substrate.

14. A process for producing an analyte sensor device according to claim 1, comprising the steps of:
- providing an organic field-effect transistor comprising an organic polymeric semiconductor layer connecting a source electrode and a drain electrode, and further comprising a gate electrode separated from said organic polymeric semiconductor layer by a dielectric layer, and
- incorporating an oligopeptide recognition sequence which is selective with respect to the analyte into either the organic polymeric semiconductor layer or the dielectric layer, or both.

15. A method for selectively detecting an analyte, comprising the steps of:
- providing a sensor device according to any one of claims 1 to 13,
- exposing a surface of said sensor device to the analyte,
- applying a voltage to the gate electrode of said sensor device, and
- detecting a change in the dielectric behavior of the gate electrode, said change being indicative of the presence of the analyte.

16. A polymer blend of (a) a polythiophene polymer or copolymer and (b) a polymer (P) functionalized with an oligopeptide sequence having from 4 to 12 amino-acids, wherein the weight ratio (b)/(a) ranges from 9:1 to 1:9, and wherein said polymer (P) is an organic polymer with a dielectric constant ranging from 2.4 to 10.

17. A polymer blend according to claim 16, wherein the oligopeptide sequence having from 4 to 12 amino-acids represents from 2% to 20% by weight of the polymer.

18. A polymer blend according to claim 16 or claim 17, wherein the oligopeptide sequence represents from 0.5% to 10% by weight of the polymer blend.

19. Use of a polymer blend according to any one of claims 16 to 18 as a component of a dielectric layer or a semiconductor layer, and/or an intermediate layer located between the semiconductor layer and the dielectric layer, of an organic field-effect transistor.
